# EUROPEAN PATENT APPLICATION

(11) **EP 1 517 255 A1**
(43) Date of publication of application: **23.03.2005**
(21) Application number: 03741123.8
(22) Date of filing: 25.06.2003
(51) Int. Cl.: G06F 17/60

(54) **SETTLEMENT INFORMATION NOTIFICATION SERVICE SERVER AND SETTLEMENT INFORMATION NOTIFICATION METHOD**

(30) Priority: 26.06.2002 JP 2002186095
(71) Applicant: MATSUSHITA ELECTRIC INDUSTRIAL CO., LTD., Kadoma-shi, Osaka 571-8501 (JP)
(72) Inventor: URAKAMI, Keiji, Yokohama-shi, Kanagawa 233-0002 (JP); TOYOSHIMA, Shigeru, Yokohama-shi, Kanagawa 226-0006 (JP); KATSUMATA, Michiyasu, Yokohama-shi, Kanagawa 226-0015 (JP); URATA, Yasuto, Yokohama-shi, Kanagawa 233-0016 (JP)
(74) Representative: Grünecker, Kinkeldey, Stockmair & Schwanhäusser Anwaltssozietät
(86) International application number: PCT/JP2003/008046
(87) International publication number: WO 2004/003808

(57) **Abstract**

It is an object of the invention to provide a settlement information notifying service server and a settlement information notifying method which can notify a card user of information about a settlement when a card is utilized. When a user (8) puts a non-contact IC card on an IC card reading/writing device (10), electronic money recorded on the non-contact IC card is updated (reduced). Information about the balance of the electronic money thus updated is transferred to a balance information notifying server (3) and the information about the balance is compared with a preset threshold. As a result of the comparison, in the case in which the information about the balance is equal to or less than the threshold, the balance information notifying server (3) attaches, to an electronic mail, the information about the balance of the electronic money or notification information for giving a notice that the balance is reduced and transmits the electronic mail to a portable phone (7) to be a transmitting destination which is set by the user (8). By ascertaining the balance information received through the portable phone (7), the user (8) can confirm the balance of the electronic money recorded on the non-contact IC card without using a dedicated apparatus.

## Description

### <TECHNICAL FIELD>

The present invention relates to a settlement information notifying service server and a method for notifying a settlement information which notify a card user of settlement information obtained after a settlement through an IC card of a non-contact type or a card of a contact type.

### <BACKGROUND ART>

As disclosed in JP-A-5-63855, conventionally, a call managing apparatus for managing a rental portable phone has a system for giving warning to a lent portable phone through a radio signal to notify a user that the call balance of the same portable phone is equal to or less than a predetermined maximum amount if any.

As disclosed in JP-A-9-312708, moreover, in some mobile communication systems using a portable phone of a prepaid type, a warning message is transmitted to the portable phone of the prepaid type to notify a user that the balance of a prepaid call charge becomes equal to or smaller than a predetermined value if any.

However, the conventional systems utilizes a rental portable phone or a portable phone of a prepaid type and is not assumed to notify a card user of information about a balance or information about a utilization history through a communication network when there is utilized a card such as an IC card to be used for getting in/out of a train station yard or getting on/off a bus or a credit card to be used for purchasing a product.

For this reason, conventionally, the user of the IC card can confirm information about a balance or information about a utilization history of the IC card by only utilizing a fixed terminal in a station yard. Furthermore, the user of the credit card can confirm the utilization history information through only a detailed statement obtained after the utilization of the credit card or a direct mail having a utilization history for each month recorded thereon.

The invention has been made in consideration of the circumstances and has an object to provide a settlement information notifying service server and a settlement information notifying method which can notify a card user of information about a settlement when using a card.

### <DISCLOSURE OF THE INVENTION>

A settlement information notifying service server according to the invention is characterized by a notifying unit for receiving information about a settlement by a card to carry out the settlement and notifying a user of the card of the received settlement information through a communication network. By this structure, a card user can confirm the settlement information when carrying out the settlement by using the card.

Moreover, the settlement information notifying service server according to the invention is characterized in that the card has electronic money recorded previously thereon and the settlement information includes information about a balance of the electronic money, and the notifying unit notifies the user of the information about the balance of the electronic money or information about warning when the balance information is lower than a threshold. By this structure, in the case in which the balance of the electronic money is reduced, the user is notified of the balance information or the warning information. Therefore, the user can take countermeasures based on the notification, for example, the user can fill up the electronic money or can be prevented from spending the electronic money.

Furthermore, the settlement information notifying service server according to the second aspect of the invention is characterized in that the settlement is carried out for managing an entrance/exit to/from a predetermined region and the notifying unit transmits an electronic mail describing contents of the notification to a portable communication terminal possessed by the user, thereby carrying out the notification. By this structure, the user can confirm the information about the balance of the electronic money after getting in/out of the predetermined region through the portable communication terminal immediately after the entrance/exit. Therefore, it is possible to provide a service capable of knowing the balance information in real time.

In addition, the settlement information notifying service server according to the invention is characterized in that the card has electronic money recorded previously thereon and the settlement information includes information about a spent amount of the electronic money, and the notifying unit notifies the user of a total of the information about the spent amount or information about warning when the total of the information about the spent amount exceeds a threshold. By this structure, the user can be prevented from excessively spending the electronic money.

Moreover, the settlement information notifying service server according to the invention is characterized in that a plurality of thresholds is present and the notifying unit carries out the notification separately at plural times based on each of the thresholds and the balance information. By this structure, the user is notified separately at plural times. Therefore, the user can carry out the settlement while caring about the balance of the electronic money.

Furthermore, the settlement information notifying service server according to the invention is characterized in that presence of a notification to the user can be set by the user. By this structure, a user requiring no notice can set to reject the notice. Consequently, it is possible to give a service corresponding to the demand of the user.

In addition, the settlement information notifying service server according to the invention is characterized in that the threshold can be set by the user. By this structure, it is possible to give a service corresponding to the user.

A settlement information notifying method according to the invention is characterized by the steps of carrying out a settlement by a card for performing the settlement, receiving settlement information about the settlement, and giving a notice of the settlement information through a communication network. By this structure, a card user can confirm the settlement information when carrying out the settlement by using the card.

Moreover, the settlement information notifying method according to the invention further includes the steps of comparing information about a balance of electronic money included in the settlement information with a threshold, and giving a notice of the balance information or information about warning when the balance information is lower than the threshold. By this structure, in the case in which the balance of the electronic money is reduced, a notice of the balance information or the warning information is given. Therefore, a card user can take countermeasures based on the notification, for example, the card user can fill up the electronic money or can be prevented from spending the electronic money.

Furthermore, the settlement information notifying method according to the invention further includes the steps of comparing a total of information about a spent amount of electronic money induded in the settlement information with a threshold, and giving a notice of the total of the information about the spent amount or information about warning when the total of the information about the spent amount exceeds the threshold. By this structure, the user can be prevented from excessively spending the electronic money.

In addition, the settlement information notifying method according to the invention further includes the step of comparing each of the thresholds with the information about the balance of the electronic money when the thresholds are present. By this structure, the user is notified separately at plural times. Therefore, the user can carry out the settlement while caring about the balance of the electronic money.

### <BRIEF DESCRIPTION OF THE DRAWINGS>

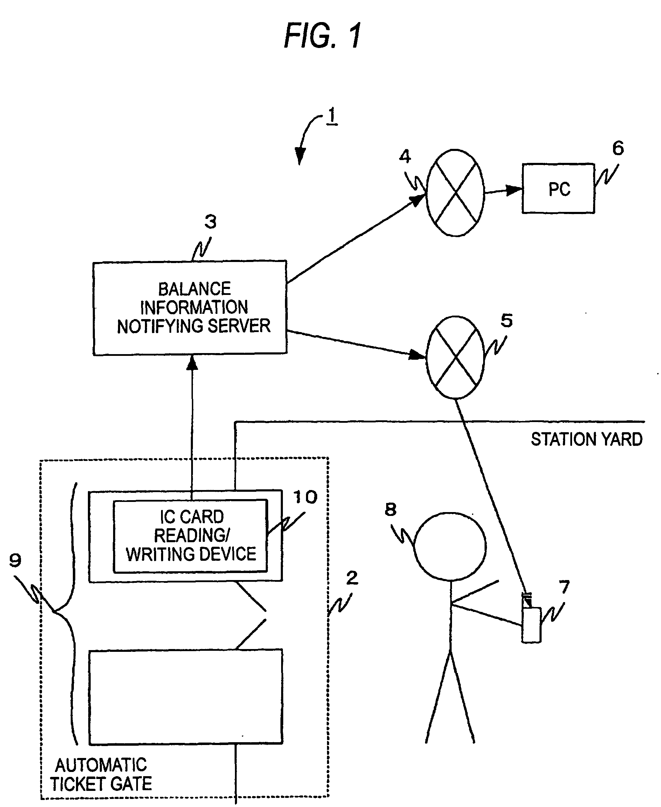

Fig. 1 is a schematic view showing the structure of a balance information notifying system according to an embodiment of the invention.

In the drawing, 1 denotes a balance information notifying system, 2 denotes an automatic ticket gate, 3 denotes a balance information notifying server, 4 denotes a network, 5 denotes a portable phone network, 6 denotes a PC, 7 denotes a portable phone, 8 denotes a user, 9 denotes a gate device, and 10 denotes an IC card reading/writing device.

### <BEST MODE FOR CARRYING OUT THE INVENTION>

An embodiment of the invention will be described below with reference to the drawing.

### (First Embodiment)

In the embodiment, description will be given to a configuration in the case in which a user gets in/out of an automatic ticket gate provided in a station yard.

Fig. 1 is a schematic view showing the structure of a balance information notifying system according to an embodiment of the invention.

A balance information notifying system 1 includes an automatic ticket gate 2, a balance information notifying server 3, a network 4 such as an internet, a portable phone network 5, a personal computer (PC) 6 and a portable phone 7. Moreover, 8 denotes a user of the system, and the user 8 possesses the portable phone 7 and a non-contact IC card. Furthermore, the automatic ticket gate 2 includes a gate device 9 and an IC card reading/writing device 10.

The automatic ticket gate 2 updates electronic money information recorded on the non-contact IC card possessed by the user 8 through the IC card reading/writing device 10, thereby decreasing electronic money and switching the gate device 9. Moreover, information about the balance of the electronic money which is read from the non-contact IC card, information about the utilization history of the electronic money which is recorded on the non-contact IC card and a user ID are transferred to the balance information notifying server 3.

The balance information notifying server 3 includes a receiving portion (not shown) for receiving information about a settlement such as the information about a balance or the information about a utilization history in the non-contact IC card and the user ID of an IC card user which are transmitted from the automatic ticket gate 2, and a notifying portion (not shown) for transmitting information about a settlement or information about warning such as a sentence indicative of the warning and giving a notice through an electronic mail to communication terminals (the PC 6 and the portable phone 7) set by a user corresponding to the user ID depending on the received settlement information. Moreover, the settlement information and the warning information may be stored in the balance information notifying server 2 so as to be read from the PC 6 or the portable phone 7 through a web access.

Next, description will be given to the operation of the balance information notifying system 1.

First of all, the user 8 registers a user in the balance information notifying server 3 through a web access by the PC6 or the portable phone 7. The user sets a notification destination (an electronic mail address) for the balance information or the warning information, registers the user ID and carries out other setting operations.

When the user puts a non-contact IC card, on which electronic money for 5000 YEN and a user ID are recorded, on the IC card reading/writing device 10 of the automatic ticket gate 2 after the registration of the user, a communication is carried out between the IC card reading/writing device 10 and the non-contact IC card and 130 YEN to be a starting fare is subtracted from the electronic money of 5000 YEN of the non-contact IC card so that the balance of the non-contact IC card is obtained as 4870 YEN. The serial settlement information (information about the fact that 130 YEN is subtracted from 5000 YEN so that 4870 YEN is obtained) is transferred to the balance information notifying server 3.

Description will be given to the case in which the user 8 repetitively gets on/off a train by the serial operation so that the balance of the electronic money of the non-contact IC card is obtained as 620 YEN.

When the user 8 passes through the automatic ticket gate 2 in a state in which the balance of the electronic money is 620 YEN, the starting fare of 130 YEN is subtracted from 620 YEN and the information about the settlement is transferred to the balance information notifying server 3.

In the balance information notifying server 3, 490 YEN to be the balance of the electronic money included in the received settlement information is compared with 500 YEN to be a threshold amount which is preset by the user 8 or the manager of the balance information notifying server 3. In this case, 490 YEN to be the balance of the electronic money is less than 500 YEN to be the threshold amount. For this reason, the balance notifying information server 3 attaches, to an electronic mail, balance notifying information for the notification of the fact that the balance of the electronic money is 490 YEN, warning information for giving warning against the small balance of the electronic money or information about the utilization history of the electronic money through the non-contact IC card possessed by the user 8. The electronic mail is transmitted through the network 4 or the portable phone network 5 to an electronic mail address set by the user corresponding to the received user ID.

The user 8 receiving the electronic mail through the portable phone 7 confirms, over a display, the information about the balance notification, the information about the warning or the information about the utilization history which is attached to the electronic mail.

As described above, according to the embodiment, in the case in which the balance of the electronic money recorded on the non-contact IC card is equal to or smaller than the threshold amount, an electronic mail for transmitting the purport is sent to the portable phone possessed by the user so that the user can confirm the situation immediately when the balance is reduced.

Since the non-contact IC card does not directly come in contact with the reading/writing device, the balance of the electronic money which is recorded can be confirmed through only a dedicated apparatus provided in a station yard or the display of the automatic ticket gate 2. As in the embodiment, accordingly, it is possible to provide a useful service for the user by confirming the balance of the electronic money through the portable phone without requiring the dedicated apparatus.

While one threshold amount is previously registered in the balance information notifying server 3 in the embodiment, it is also possible to register a plurality of threshold amounts. In this case, for example, it is preferable to employ such a structure that three threshold amounts of 3000 YEN, 1500 YEN and 500 YEN are registered and the balance information notifying server 3 compares the balance information included in the settlement information transmitted from the automatic ticket gate 2 with the three threshold amounts respectively, and transmits, to the user, the balance notifying information, the warning information or the utilization history information in three stages, for example, a balance of 3000 YEN or less, 1500 YEN or less, and 500 YEN or less.

Thus, the balance notification can be confirmed stepwise. Consequently, the user of the non-contact IC card can use the non-contact IC card while caring about the balance of the electronic money.

Moreover, it is also possible to employ a structure in which the purport is not given to the user when the balance is equal to or less than the threshold amount but the purport is given to the user when a total amount for a predetermined period of the spent amount of the electronic money is equal to or more than the threshold amount. Furthermore, the user that does not want to receive the electronic mail can also set to reject the receipt of the electronic mail through the balance information notifying server 3.

Furthermore, it is possible to obtain the same advantages as described above by using, for a card to be used for the settlement of a railroad fare, a recording medium such as a magnetic card of a contact type or an SD card having a security function in addition to the non-contact IC card.

The balance information notifying system 1 according to the embodiment can be applied to a system for previously recording the electronic money on a card and getting in/out of a predetermined region or getting on/off a ride by using the recorded electronic money, for example, an operation for getting on/off a bus, an entrance/exit to/from a movie theater, an aquarium, a concert hall and an amusement park, and an entrance/exit to/from an attraction in a theme park in addition to the operation for getting on/off a train.

While the description has been given to the system for previously recording the electronic money on the card and giving a notice to a user corresponding to the balance of the recorded electronic money in the embodiment, moreover, it is also possible to employ a configuration utilizing a credit card for carrying out a settlement later. Description will be given to a utilization history information notifying system using a credit card.

### (Second Embodiment)

A utilization history information notifying system according to a second embodiment has the same structure as that of Fig. 1 except that a transacting device for transacting a product in a settlement through a credit card is provided in place of the automatic ticket gate 2 and a utilization history information notifying server is provided in place of the balance information notifying server 3 in the balance information notifying system 1 shown in Fig. 1.

In the utilization history information notifying system, when a user purchases a product by a credit card, information about the price of the purchased product, a direct debit date and information about a settlement such as information about the user are transferred from the transacting device to the utilization history information notifying server. The utilization history information notifying server stores the information about a price which is included in the received information about a settlement for a predetermined period (for example, one month), and notifies a user of information about a current credit card spending amount which is stored or warning information for giving warning of the fact that a spent amount is large if the information about a price which is stored exceeds a predetermined threshold amount. Every time a product is purchased by a credit card, alternatively, a user is notified of information about the utilization history of the credit card in the same manner as in the first embodiment.

As described above, according to the embodiment, in the case in which the total amount of the purchase of the product by the credit card is equal to or larger than a threshold amount, the purport is given to the portable phone of a user. Therefore, the user can confirm the notice, thereby preventing the excessive use of the credit card.

Every time the credit card is used, moreover, a user (the owner of the credit card) is notified of information about a utilization history. Also in the case in which the credit card is lost and used by others, consequently, the user can immediately become aware of the illegal use of the credit card. Thus, it is possible to provide a useful system for preventing crimes.

While the invention has been described in detail with reference to the specific embodiments; it is apparent to the skilled in the art that various changes and modifications can be made without departing from the spirit and scope of the invention.

The application is based on Japanese Patent Application No. 2002-186095 filed on June 26, 2002 and contents thereof are incorporated herein by reference.

### <INDUSTRIAL APPLICABILITY>

As described above, according to the invention, it is possible to provide a settlement information notifying service server and a settlement information notifying method which can notify a card user of information about a settlement when a card is utilized.

## Claims

1. A settlement information notifying service server, comprising a notifying unit, which receives information about a settlement of a card for carrying out the settlement and notifies a user of the card of the received settlement information through a communication network.

2. The settlement information notifying service server as set forth in claim 1, wherein the card has electronic money recorded previously thereon;
wherein the settlement information includes information about a balance of the electronic money; and
wherein the notifying unit notifies the user of the information about the balance of the electronic money or information about warning when the information about the balance is lower than a threshold.

3. The settlement information notifying service server as set forth in claim 2, wherein the settlement is carried out for managing an entrance/exit to/from a predetermined region; and
wherein the notifying unit transfers an electronic mail describing contents of the notification to a portable communication terminal possessed by the user to carry out the notification.

4. The settlement information notifying service server as set forth in claim 1, wherein the card has electronic money recorded previously thereon;
wherein the settlement information includes information about a spent amount of the electronic money; and
wherein the notifying unit notifies the user of a total of the information about the spent amount or information about warning when the total of the information about the spent amount exceeds a threshold.

5. The settlement information notifying service server as set forth in claim 2 or 3, wherein a plurality of the thresholds is present; and
wherein the notifying unit carries out the notification separately at plural times based on each of the thresholds and the information about the balance.

6. The settlement information notifying service server as set forth in any one of claims 1 to 5, wherein presence of a notification to the user can be set by the user.

7. The settlement information notifying service server as set forth in any one of claims 2 to 6, wherein the threshold can be set by the user.

8. A method for notifying settlement information, comprising the steps of:
carrying out a settlement by a card for performing the settlement;
receiving settlement information about the settlement; and
notifying the settlement information through a communication network.

9. The method for notifying the settlement information as set forth in claim 8, further comprising the steps of:
comparing information about a balance of electronic money included in the settlement information with a threshold; and
notifying the information about the balance or information about warning when the information about the balance is lower than the threshold.

10. The method for notifying the settlement information as set forth in claim 8, further comprising the steps of:
comparing a total of information about a spent amount of electronic money included in the settlement information with a threshold; and
notifying the total of the information about the spent amount or information about warning when the total of the information about the spent amount exceeds the threshold.

11. The method for notifying the settlement information as set forth in claim 9, further comprising the step of comparing each of the thresholds with the information about the balance of the electronic money in a case that a plurality of the thresholds are present.
